# EUROPÄISCHE PATENTANMELDUNG

(11) **EP 4 144 468 A1**
(43) Veröffentlichungstag der Anmeldung: **08.03.2023**
(21) Anmeldenummer: 22188919.9
(22) Anmeldetag: 05.08.2022
(51) Int. Cl.: B23H 3/00, B23H 9/10, B23H 11/00, B23H 3/10

(54) **FERTIGUNGSVORRICHTUNG ZUM ELEKTROCHEMISCHEN BEARBEITEN EINES BAUTEILS, INSBESONDERE EINES TURBINENBAUTEILS, VERFAHREN ZUM ELEKTROCHEMISCHEN BEARBEITEN EINES BAUTEILS UND BAUTEIL**

(30) Priorität: 01.09.2021 DE 102021122584
(71) Anmelder: MTU Aero Engines AG, 80995 München (DE)
(72) Erfinder: Bayer, Kilian, 80995 München (DE); Steininger, Benjamin, 80995 München (DE); Dzemajili, Gazmen, 80995 München (DE)

(57) **Zusammenfassung**

Die Erfindung betrifft eine Fertigungsvorrichtung (1) zum elektrochemischen Bearbeiten eines Bauteils (3), insbesondere eines Turbinenbauteils (3), wobei die Fertigungsvorrichtung (1) mindestens eine Abtragungseinrichtung (2) umfasst, die dazu eingerichtet ist, nach einem vorbestimmten elektrochemischen Abtragungsverfahren Material des Bauteils (3) abzutragen. Es ist vorgesehen, dass die Fertigungsvorrichtung (1) mindestens eine Reinigungseinrichtung (11) umfasst, die dazu eingerichtet ist, die Elektrolytlösung (7) nach einem vorbestimmten Strahlverfahren auf das Bauteil (3) zu strahlen (15), um eine sich auf dem Bauteil (3) während des vorbestimmten elektrochemischen Abtragungsverfahren gebildete Rückstandsschicht zu entfernen.

## Beschreibung

Die Erfindung betrifft eine Fertigungsvorrichtung zum elektrochemischen Bearbeiten eines Bauteils, insbesondere eines Turbinenbauteils gemäß den Merkmalen des Oberbegriffs des Anspruchs 1, ein Verfahren zum elektrochemischen Bearbeiten eines Bauteils gemäß den Merkmalen des Oberbegriffs des Anspruchs 8 sowie ein Bauteil gemäß den Merkmalen des Oberbegriffs des Anspruchs 9.

Bei der Fertigung von Bauteilen für Turbinen werden zunehmend elektrochemische Behandlungsverfahren angewandt. Zum Beispiel ist mit dem sogenannten elektrochemischen Abtragen ein Verfahren zum exakten und sehr präzisen Bearbeiten von Oberflächen bekannt. Beim elektrochemischen Abtragen wird das Bauteil als Anode polarisiert, um die Oberfläche des Bauteiles zu bearbeiten. Eine Abtragungseinrichtung, welche zum Bearbeiten des Bauteils vorgesehen ist, wird als Kathode polarisiert. Das Bauteil und die Abtragungseinrichtung sind durch einen Spalt beabstandet. Aus diesem Grund handelt es sich um ein kontaktloses Bearbeitungsverfahren. Die Abtragung von Material des Bauteils erfolgt durch elektrochemische Reaktionen des Bauteiles mit einer sich in dem Spalt zwischen dem Bauteil und der Abtragungseinrichtung befindlichen Elektrolytlösung. Die Elektrolytlösung kann durch den Spalt geleitet werden, um das abgetragene Material aus dem Spalt zu entfernen. Bei üblichen Vorgängen des elektrochemischen Senkens wird mit Abständen von der Abtragungseinrichtung zum Bauteil gearbeitet die im Bereich von 1 bis 2 mm liegen können. Zum Erzeugen feinerer Strukturen und Formen kann der Abstand auf Größen im Bereich von 10 bis 50 µm und darunter abgesenkt werden (Präzises Elektrochemisches Senken).

Die verwendeten Elektrolytlösungen enthalten dissoziierte Ionen, die sich unter dem Einfluss des von der Anode und der Kathode gebildeten elektrischen Feldes gerichtet bewegen. Bei diesen Bauteilen kann es sich um solche handeln, die zur Herstellung bestimmter Flugtriebwerkbauteile verwendet werden, oder um die Bauteil bereits fertiger Bauteile, die unter Verwendung der Elektrolytlösung gereinigt, weiterbearbeitet oder repariert beziehungsweise überholt werden sollen. Bei diesen Bauteilen kann es sich beispielsweise um sogenannte Blisks (Blade Integrated Disks) aus Ni- oder Ti-Basislegierungen, Niederdruckturbinen-Scheiben und generell um alle Bauteile handeln, die geätzt, beschichtet oder gereinigt werden sollen. Beispielsweise werden bei der elektrochemischen Metallbearbeitung ((Hochgenaues) elektrochemisches Abtragen, (P)ECM) Legierungsbestandteile des Bauteiles mittels Elektrolyse aufgelöst und gehen als Elektrolyt in Lösung. Je nach Werkstoffgruppe findet eine anodische Metallauflösung in dafür geeigneten wässrigen Elektrolytlösungen statt. Die entstandenen Metallkationen (z.B. Ni²⁺, Fe²⁺, Fe³⁺, Cr⁶⁺ usw.) reichern sich entweder kontinuierlich in der Elektrolytlösung an oder werden direkt als Metallhydroxid ausgefällt und beispielsweise durch Filtration aus dem System entfernt. Beispielsweise wird für die Bearbeitung von Nickelbasislegierungen normalerweise eine Natriumnitratlösung mit definierter Konzentration verwendet.

Während der elektrochemischen Bearbeitung der Bauteile kann sich jedoch eine Rückstandsschicht auf dem Bauteil bilden. Die Rückstandsschicht ist kurz nach der elektrochemischen Bearbeitung flüssig und relativ leicht zu entfernen. Nach einer Zeit trocknet die Rückstandsschicht aus, und es bildet sich eine Kruste an dem Bauteil, welche von dem Bauteil entfernt werden muss.

Nach dem derzeitigen Stand der Technik ist es üblich, die elektrochemische Bearbeitung des gesamten Bauteils abzuschließen, bevor die Rückstandsschicht in einem nachgelagerten Schritt entfernt wird. Zur Reinigung wird das Bauteil nach der elektrochemischen Bearbeitung aus einer Bauteilkammer der Fertigungsvorrichtung entfernt und in der Regel mittels einer Kugelbestrahlung bearbeitet, um die Rückstandsschicht zu entfernen. Durch diese nachträglich erfolgende Bearbeitung des Bauteils in einer separaten Vorrichtung ist ein höherer Fertigungsaufwand bei der Fertigung des Bauteils erforderlich. Der erhöhte Aufwand ist darauf zurückzuführen, dass nach der elektrochemischen Bearbeitung ein Ausbau des Bauteils aus der Fertigungsvorrichtung vorgesehen ist und das Kugelstrahlen der Bauteile aufgrund der Härte der gebildeten Rückstandsschicht aufwendig ist.

Aus dem Stand der Technik sind mehrere Vorrichtungen und/oder Verfahren zum elektrochemischen Bearbeiten von Bauteilen bekannt, wovon manche exemplarisch in dem folgenden Abschnitt angeführt sind.

In der US 7,153,411 B2 sind ein Verfahren zum Reinigen und Polieren von metallischen Legierungen und dadurch gereinigte oder polierte Gegenstände offenbart. In dem Verfahren zum Reinigen und Polieren einer Legierung, die mindestens ein Edelmetall und mindestens ein unedles Metall umfasst, ist es vorgesehen, dass das Verfahren Schritte des Eintauchens der Legierung in ein elektrolytisches Säurebad, das mindestens einen Chelatbildner oder Komplexbildner einschließlich Schwefel umfasst, und das Anlegen einer periodischen Umkehrwellenform mit mehreren Impulsen umfasst.

In der EP 1 850 995 A2 sind ein Verfahren und ein System zur elektrochemischen Bearbeitung offenbart. Das elektrochemische Bearbeitungssystem zur Bearbeitung eines Bauteils umfasst eine Vielzahl von elektrochemischen Bearbeitungsstationen. Eine erste elektrochemische Bearbeitungsstation bearbeitet einen ersten Bereich des Bauteils. Eine zweite elektrochemische Bearbeitungsstation bearbeitet einen zweiten Bereich des Bauteils, der von dem ersten Bereich getrennt ist. Es können auch zusätzliche elektrochemische Bearbeitungsstationen verwendet werden. Jede elektrochemische Bearbeitungsstation enthält eine stationäre Elektrode, die elektrischen Strom zum Erodieren von Material aus dem Bauteil liefert. Jede elektrochemische Bearbeitungsstation enthält außerdem einen Ultraschallwandler zum Bestimmen der Breite des Elektrolyten zwischen der stationären Elektrode und dem Bauteil. Die Bearbeitung des Bauteils in jeder elektrochemischen Bearbeitungsstation ist abgeschlossen, wenn die Breite des Elektrolyten eine vorgegebene Breite erreicht.

In der Veröffentlichung NATSU, Wataru; HE, Junfeng; IWANAGA, Yu. Experimental Study on Electrochemical Machining with Electrolyte Confined by Absorption Material. Procedia CIRP, 2020, 87. Jg., S. 263-267; ist eine Methode zur elektrochemischen Bearbeitung mit durch Absorptionsmaterial eingeschlossenen Elektrolyten beschrieben. Während der Bearbeitung wird das nichtmetallische Absorptionsmaterial zwischen dem kathodischen Werkzeug und dem anodischen Bauteil eingefügt, nachdem es den Elektrolyten absorbiert hat.

In der Veröffentlichung WU, Ming, et al. Fabrication of Surface Micro Letters by Electrolyte Jet Mask Machining. Procedia CIRP, 2020, 95. Jg., S. 827-832; wird eine experimentelle Untersuchung vorgestellt, bei der Lithographie in einer Maskenelektrolyt-Jetbearbeitung eingesetzt wird.

Der Vortrag Surekar, Suresh & Kharche, Wasudeo. (2010). Electrolytes In Electrochemical Machining Process; befasst sich mit der Rolle von Elektrolytlösungen bei elektrochemischen Fertigungsverfahren.

Es ist eine Aufgabe der Erfindung, einen Aufwand einer Reinigung eines Bauteils nach einem elektrochemischen Fertigungsverfahren zu reduzieren.

Die Aufgabe wird erfindungsgemäß durch eine Fertigungsvorrichtung zum elektrochemischen Bearbeiten eines Bauteils gemäß den Merkmalen des Anspruchs 1, ein Verfahren zum elektrochemischen Bearbeiten eines Bauteils gemäß den Merkmalen des Anspruchs 8, sowie durch ein Bauteil gemäß den Merkmalen des Anspruchs 9 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft eine Fertigungsvorrichtung zum elektrochemischen Bearbeiten eines Bauteils, insbesondere eines Turbinenbauteils. Bei dem Turbinenbauteil kann es sich beispielsweise um einen sogenannten Blisk handeln. Die Fertigungsvorrichtung umfasst mindestens eine Abtragungseinrichtung, die dazu eingerichtet ist, nach einem vorbestimmten elektrochemischen Abtragungsverfahren Material des Bauteils abzutragen. Bei dem vorbestimmten elektrochemischen Abtragungsverfahren kann es sich beispielsweise um elektrochemisches Abtragen oder sogenanntes hochgenaues elektrochemisches Abtragen handeln. Es kann vorgesehen sein, dass das elektrochemische Abtragungsverfahren eine Auflösung von Legierungsbestandteilen des Bauteils umfasst. Das abgetragene Material kann durch eine verwendete Elektrolytlösung abgeführt werden oder sich auf dem Bauteil ablagern. Während des Abtragungsverfahrens kann an dem Bauteil eine Spannung angelegt werden, um diese als Anode zu verwenden. Die Abtragungseinrichtung kann während des Abtragungsverfahrens als Kathode bereitgestellt sein. Während des Abtragens kann sich eine Rückstandsschicht auf dem Bauteil ausbilden.

Um ein Entfernen der gebildeten Rückstandsschicht von dem Bauteil zu ermöglichen, ist es vorgesehen, dass die Fertigungsvorrichtung mindestens eine Reinigungseinrichtung umfasst, die dazu eingerichtet ist, die Elektrolytlösung nach einem vorbestimmten Strahlverfahren auf das Bauteil zu strahlen, um eine sich auf dem Bauteil während des vorbestimmten elektrochemischen Abtragungsverfahren gebildete Rückstandsschicht zu entfernen. Mit anderen Worten ist die Fertigungsvorrichtung dazu eingerichtet, das Bauteil nach dem Abtragungsverfahren mittels der Reinigungseinrichtung zu bestrahlen, um die gebildete Rückstandsschicht von dem Bauteil zu entfernen. Die Reinigungseinrichtung ist dazu eingerichtet, die Elektrolytlösung als Strahlmittel in dem Reinigungsverfahren zu verwenden.

Durch die Erfindung ergibt sich einerseits der Vorteil, dass sowohl die elektrochemische Abtragung als auch die Reinigung des Bauteils durch die Fertigungsvorrichtung durchgeführt werden können. Dadurch ist es nicht erforderlich, das Bauteil nach dem Abtragungsverfahren in eine andere Vorrichtung zu verlagern. Zudem kann eine direkte Reinigungsbehandlung direkt nach dem Abtragen erfolgen, und somit innerhalb eines Zeitraums, in welchem die Rückstandsschicht noch nicht ausgetrocknet ist. Durch die zeitnahe Durchführung des Reinigungsverfahrens kann eine komplizierte Entfernung der eingetrockneten Rückstandsschicht durch Kugelstrahlen vermieden werden. Durch die Verwendung der Elektrolytlösung als Strahlmittel ist eine schonendere Behandlung des Bauteils möglich als bei dem Kugelstrahlen. Aufgrund der Verwendung der Elektrolytlösung ist es zudem nicht erforderlich, ein zusätzliches Auffangbecken zum Auffangen des Strahlmittels in der Fertigungsvorrichtung bereitzustellen.

Die Erfindung umfasst auch Weiterbildungen, durch die sich weitere Vorteile ergeben.

Eine Weiterbildung der Erfindung sieht vor, dass die Fertigungsvorrichtung dazu eingerichtet ist, das Bauteil und/oder die Abtragungseinrichtung zu verfahren und/oder zu rotieren, um das Bauteil in einer vorbestimmten Abtragungsposition in Bezug auf die Abtragungseinrichtung anzuordnen. Mit anderen Worten ist für die Durchführung der Abtragung die Anordnung des Bauteils in der vorbestimmten Abtragungsposition vorgesehen. Die Abtragungsposition beschreibt eine vorbestimmte Position des Bauteils in Bezug auf die Abtragungseinrichtung. Um die vorbestimmte Abtragungsposition zu erreichen, ist die Fertigungsvorrichtung dazu eingerichtet, das Bauteil und/oder die Abtragungseinrichtung zu verfahren und/oder zu rotieren. Die Fertigungsvorrichtung kann beispielsweise einen Aktuator aufweisen, der dazu eingerichtet ist, das Bauteil und/oder die Abtragungseinrichtung zu verfahren.

Eine Weiterbildung der Erfindung sieht vor, dass die Fertigungsvorrichtung dazu eingerichtet ist, das Bauteil und/oder die Reinigungseinrichtung zu verfahren und/oder zu rotieren, um das Bauteil in einer vorbestimmten Reinigungsposition in Bezug auf die Reinigungseinrichtung anzuordnen. Mit anderen Worten ist es vorgesehen, dass zur Durchführung des vorbestimmten Reinigungsverfahrens das Bauteil in der vorbestimmten Reinigungsposition in Bezug auf die Reinigungseinrichtung angeordnet ist. Um dies zu ermöglichen, kann die Fertigungsvorrichtung dazu eingerichtet sein, das Bauteil und/oder die Reinigungseinrichtung zu verfahren und/oder zu rotieren.

Eine Weiterbildung der Erfindung sieht vor, dass die Reinigungseinrichtung zumindest eine Strahldüse umfasst, die dazu eingerichtet ist, mindestens einen Strahl der Elektrolytlösung auf vorbestimmte Bereiche des Bauteils zu strahlen. Mit anderen Worten weist die Reinigungseinrichtung die zumindest eine Strahldüse auf. Die Strahldüse ist dazu vorgesehen, die Elektrolytlösung als Strahlmittel auf die vorbestimmten Bereiche des Bauteils zu strahlen, um durch das Auftreffen die Rückstandsschicht von dem Bauteil zu lösen. Die Strahldüse kann beispielsweise den Strahl der Elektrolytlösung durch eine Bereitstellung eines vorbestimmten Drucks auf den vorbestimmten Bereich des Bauteils ausgeben.

Eine Weiterbildung der Erfindung sieht vor, dass die Reinigungseinrichtung zumindest zwei der Strahldüsen umfasst, wobei die Strahldüsen derart zueinander ausgerichtet sind, dass sich die Strahlrichtungen der jeweiligen Strahlen voneinander unterscheiden. Mit anderen Worten ist es vorgesehen, dass die Reinigungseinrichtung zumindest zwei der Strahldüsen aufweist. Dabei ist es vorgesehen, dass die Strahldüsen sich in ihrer Ausrichtung und/oder Lage voneinander unterscheiden, so dass sich die durch die jeweiligen Strahldüsen ausgegebenen Strahlen in ihren Richtungen voneinander unterscheiden. Durch die Weiterbildung ergibt sich der Vorteil, dass unterschiedlich angeordnete oder ausgerichtete Oberflächen des Bauteils von einer jeweiligen der Strahldüsen bestrahlt werden können. Dadurch kann beispielsweise eine Abschattung einer Oberfläche des Bauteils bei einer Strahldüse durch eine andere der Strahldüsen ausgeglichen werden.

Eine Weiterbildung der Erfindung sieht vor, dass die Fertigungsvorrichtung dazu eingerichtet ist, das Bauteil während des vorbestimmten elektrochemischen Abtragungsverfahrens und/oder des vorbestimmten Reinigungsverfahrens um zumindest eine vorbestimmte Raumachse zu rotieren. Mit anderen Worten ist es vorgesehen, dass die Fertigungsvorrichtung dazu eingerichtet ist, das Bauteil während der elektrochemischen Abtragung und/oder der Reinigung um die vorbestimmte Raumachse zu drehen. Es kann beispielsweise vorgesehen sein, dass das elektrochemische Abtragungsverfahren eine Abtragung von unterschiedlich angeordneten Bereichen des Bauteils während des Abtragungsverfahrens umfasst. Es kann beispielsweise vorgesehen sein, dass das Bauteil als Blisk ausgeführt ist und während des vorbestimmten Abtragungsverfahrens eine Rotation des Bauteils erfolgt, um die einzelnen, um eine Scheibe des Bauteils angeordneten Schaufeln abzutragen. Entsprechend kann auch eine Rotation des Bauteils während des Reinigungsverfahrens vorgesehen sein, um die Schaufeln um die Scheibe des Bauteils nacheinander reinigen zu können.

Eine Weiterbildung der Erfindung sieht vor, dass die Abtragungseinrichtung, die Reinigungseinrichtung und das Bauteil in einer Maschinenkammer der Fertigungsvorrichtung angeordnet sind. Mit anderen Worten umfasst die Fertigungsvorrichtung eine Maschinenkammer, wobei es sich um eine abgeschlossene Kammer handeln kann, in welcher die Abtragungseinrichtung, die Reinigungseinrichtung und das Bauteil angeordnet sind. Dadurch ergibt sich der Vorteil, dass bei einem Wechsel von dem Abtragungsverfahren zu dem Reinigungsverfahren keine Anordnung des Bauteils in einer anderen Maschinenkammer erforderlich ist.

Eine Weiterbildung der Erfindung sieht vor, dass die Reinigungseinrichtung dazu eingerichtet ist, eine Ausrichtung oder Lage zumindest einer der Strahldüsen zu verändern. Mit anderen Worten ist es vorgesehen, dass die Reinigungseinrichtung zur Änderung einer Ausrichtung oder Lage der zumindest einen Strahldüse der Reinigungseinrichtung eingerichtet ist. Dadurch ergibt sich der Vorteil, dass unterschiedlich ausgerichtete Flächen des Bauteils durch eine der Strahldüsen gereinigt werden können.

Eine Weiterbildung der Erfindung sieht vor, dass die Fertigungsvorrichtung ein Reservoir aufweist, und dazu eingerichtet ist, die Reinigungseinrichtung und die Abtragungseinrichtung aus diesem Reservoir mit der Elektrolytlösung zu speisen. Mit anderen Worten ist es vorgesehen, dass die Reinigungseinrichtung und die Abtragungseinrichtung durch dasselbe Reservoir mit der Elektrolytlösung gespeist sind. Dadurch ergibt sich der Vorteil, dass kein zweites Reservoir zur Bereitstellung eines Strahlmittels bereitgestellt werden muss.

Eine Weiterbildung der Erfindung sieht vor, dass die Fertigungsvorrichtung dazu eingerichtet ist, das Bauteil nach einem vorbestimmten Fertigungsverfahren in mehreren vorbestimmten Verfahrensschritten schrittweise zu fertigen. Die Fertigungsvorrichtung ist dazu eingerichtet, in einem jeweiligen der Verfahrensschritte das Bauteil in der Abtragungsposition anzuordnen und einen jeweiligen Bereich des Bauteils nach dem vorbestimmten Abtragungsverfahren abzutragen, und anschließend das Bauteil in der Reinigungsposition anzuordnen und den jeweiligen Bereich des Bauteils nach dem vorbestimmten Reinigungsverfahren abzutragen. Mit anderen Worten ist die Fertigungsvorrichtung dazu eingerichtet, das Bauteil nach dem vorbestimmten Fertigungsverfahren zu fertigen. Es ist vorgesehen, dass das Fertigungsverfahren mehrere Fertigungsschritte zur Fertigung jeweiliger Bereiche des Bauteils umfasst, wodurch eine sequentielle Fertigung des Bauteils erfolgt. Die Fertigungsvorrichtung ist dazu eingerichtet, in einem jeweiligen der Verfahrensschritte das Bauteil in die Abtragungsposition zu führen, um Material in dem Bereich, der während des Verfahrensschrittes gefertigt werden soll, durch die Abtragungseinrichtung nach dem vorbestimmten Abtragungsverfahren abzutragen. Die Fertigungsvorrichtung ist dazu eingerichtet, nach dem Abtragen des Materials aus dem jeweiligen Bereich, das Bauteil in die Reinigungsposition zu verfahren. Die Reinigungseinrichtung ist dazu eingerichtet, den jeweiligen Bereich des Verfahrensschritts des Bauteils nach dem vorbestimmten Reinigungsverfahren zu reinigen. Die Fertigungsvorrichtung ist dazu eingerichtet, nach einem Abschluss des Reinigungsverfahrens des Verfahrensschrittes, den jeweiligen Verfahrensschritt zu beenden und einen nächsten Verfahrensschritt durch ein Verfahren des Bauteils in die Abtragungsposition einzuleiten.. Dadurch ergibt sich der Vorteil, dass ein zeitnahes Reinigen der jeweiligen Bereiche des Bauteils nach dem Abtragen ermöglicht ist.

Ein zweiter Aspekt der Erfindung betrifft ein Verfahren zum elektrochemischen Bearbeiten eines Bauteils, insbesondere eines Turbinenbauteils, wobei durch eine Abtragungseinrichtung einer Fertigungsvorrichtung nach einem vorbestimmten elektrochemischen Abtragungsverfahren Material des Bauteils abgetragen wird. Es ist vorgesehen, dass durch eine Reinigungseinrichtung der Fertigungsvorrichtung eine Elektrolytlösung nach einem vorbestimmten Strahlverfahren auf das Bauteil gestrahlt wird, um eine sich auf dem Bauteil während des vorbestimmten elektrochemischen Abtragungsverfahren gebildete Rückstandsschicht zu entfernen.

Weitere Merkmale und deren Vorteile des zweiten Erfindungsaspekts sind den Beschreibungen des ersten Erfindungsaspekts zu entnehmen.

Ein dritter Aspekt der Erfindung betrifft ein Bauteil, welches durch ein Verfahren zum elektrochemischen Bearbeiten des Bauteils gefertigt ist. Das Bauteil kann insbesondere ein Bauteil für eine Turbine sein.

Eine Weiterbildung der Erfindung sieht vor, dass das Bauteil als Blisk ausgeführt ist. Mit anderen Worten handelt es sich bei dem Bauteil um eine Blade Integrated Disk. Das Blisk ist ein Bauteil, das eine Scheibe und um einen Scheibenumlauf der Scheibe angeordnete Schaufeln aufweist, wobei es sich um ein Stoffschlüssiges zusammenhängendes Bauteil handelt.

Weitere Merkmale und deren Vorteile sind den Beschreibungen des ersten und des zweiten Erfindungsaspekts zu entnehmen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
**FIG. 1** eine schematische Darstellung einer erfindungsgemäßen Fertigungsvorrichtung zum elektrochemischen Bearbeitung eines Bauteils; und
**FIG. 2** eine weitere schematische Darstellung der erfindungsgemäßen Fertigungsvorrichtung; und
**FIG. 3** eine schematische Darstellung eines Ablaufs eines erfindungsgemäßen Verfahrens zur Fertigung eines Bauteils.

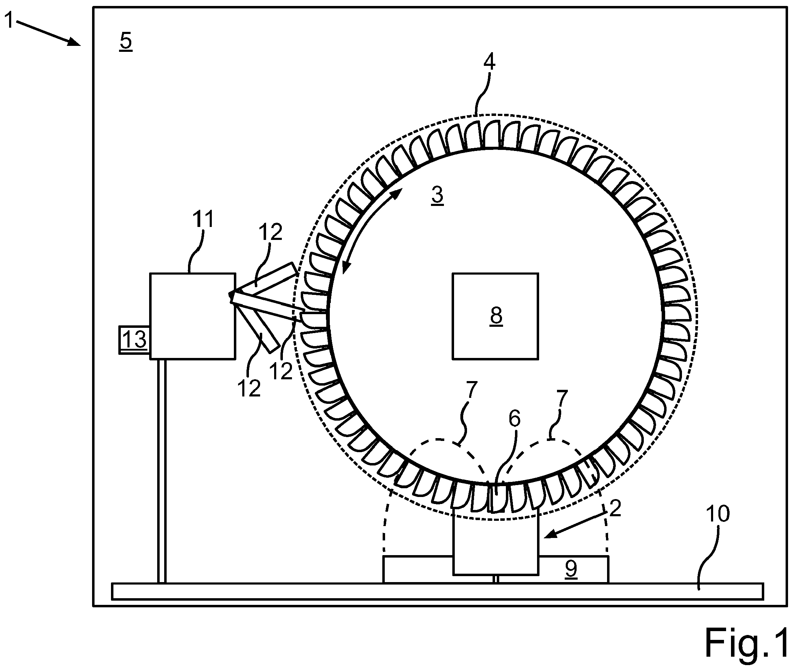

**FIG. 1** zeigt eine schematische Darstellung einer Fertigungsvorrichtung zum elektrochemischen Bearbeitung eines Bauteils. Die Fertigungsvorrichtung 1 kann eine Abtragungseinrichtung 2 aufweisen, welche dazu eingerichtet sein kann, Material eines Bauteils 3 nach einem vorbestimmten elektrochemischen Abtragungsverfahrens abzutragen. Bei dem Bauteil 3 kann es sich insbesondere um ein Element einer Turbine handeln, wie beispielsweise einem Blisk. Zur Abtragung des Materials kann es vorgesehen sein, dass das Bauteil 3 in einer vorbestimmten Abtragungsposition 4 innerhalb einer Maschinenkammer 5 der Fertigungsvorrichtung 1 angeordnet ist. Die vorbestimmte Abtragungsposition 4 kann eine vorbestimmte geometrische Relation zwischen dem Bauteil 3 und der Abtragungseinrichtung 2 beschreiben. Es kann vorgesehen sein, dass während des Abtragungsverfahrens ein Bereich 6 des Bauteils, wobei es sich beispielsweise um eine Schaufel des Bauteils 3 handeln kann, in der Abtragungseinrichtung 2 angeordnet ist. Während des vorbestimmten Abtragungsverfahrens kann es vorgesehen sein, dass die Abtragungseinrichtung 2 als Kathode und das Bauteil 3 als Anode gepolt sind, während eine Elektrolytlösung 7 durch einen Spalt zwischen dem Bauteil 3 und der Abtragungseinrichtung 2 geleitet wird, um das Material von dem Bauteil 3 abzuspülen. Es kann vorgesehen sein, dass das Bauteil 3 an einer Aktuatoreinrichtung 8 angeordnet ist, welche dazu eingerichtet sein kann, eine Position des Bauteils 3 durch ein Drehen oder verschieben des Bauteils 3 zu verändern. Ebenso kann die Abtragungseinrichtung 2 eine Halterungseinrichtung 9 aufweisen, welche ortsfest sein kann oder welche eine Position der Abtragungseinrichtung 2 verändern kann.

Die Fertigungsvorrichtung 1 kann ein Sammelbecken aufweisen, welches ein Reservoir 10 zum Auffangen und/oder bereitstellen der Elektrolytlösung 7 sein kann. Während des Abtragungsverfahrens kann die Elektrolytlösung 7 in dem Reservoir 10 der Fertigungsvorrichtung 1 gesammelt werden. Nach der Bearbeitung des Bauteils 3 oder zumindest des Bereichs 6 des Bauteils 3 kann es erforderlich sein, das Bauteil 3 oder zumindest den Bereich 6 des Bauteils 3 zu reinigen, um eine Rückstandsschicht, welche sich während des Abtragungsverfahrens auf dem Bauteil 3 oder dem Bereich 6 des Bauteils 3 gebildet hat, zu entfernen. Um dies zu ermöglichen, kann die Fertigungsvorrichtung 1 eine Reinigungseinrichtung 11 aufweisen, welche zumindest eine Strahldüse 12 aufweisen kann. Die Reinigungseinrichtung 11 kann an einer Halterungseinrichtung 13 angeordnet sein, welche die Reinigungseinrichtung 11 ortsfest oder auch verfahrbar oder rotierbar an der Maschinenkammer 5 der Fertigungsvorrichtung 1 lagern kann. Die Reinigungseinrichtung 11 kann dazu vorgesehen sein, das Bauteil 3 oder den Bereich 6 des Bauteils mittels einer Abstrahlung des zu reinigenden Bereichs zu reinigen. Als Abstrahlmittel kann dabei die Elektrolytlösung 7 verwendet werden, welche beispielsweise aus dem Auffangbecken oder einem anderen möglichen gemeinsamen Reservoir 10 entnommen werden kann, so dass die Reinigungseinrichtung 11 und die Abtragungseinrichtung 2 aus einer selben Quelle gespeist werden.

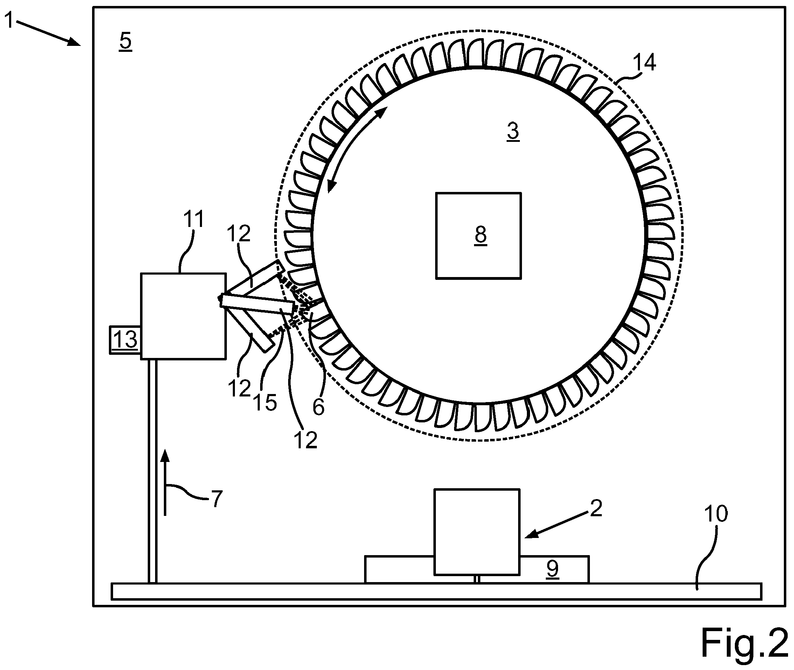

**Fig. 2** zeigt eine weitere schematische Darstellung einer Fertigungsvorrichtung zum elektrochemischen Bearbeitung eines Bauteils. Gezeigt wird das Bauteil 3 in einer vorbestimmten Reinigungsposition 14. Die Reinigungsposition 14 kann eine vorbestimmte geometrische Position des Bauteils 3 in Bezug auf die Reinigungseinrichtung 11 beschreiben. Um die Reinigungsposition 14 zu erreichen, kann es vorgesehen sein, dass das Bauteil 3 und/oder die Reinigungseinrichtung 11 verfahren werden. Die Reinigungseinrichtung 11 kann beispielsweise durch die Halterungseinrichtung 13 verfahren werden, während das Bauteil 3 beispielsweise durch die Halterungseinrichtung 8 verfahren werden kann. Befindet sich das Bauteil 3 in der vorbestimmten Reinigungsposition 14, kann die Reinigungseinrichtung 11 durch Strahldüsen 12 Strahlen 15 der Elektrolytlösung 7 abgeben, welche auf den Bereich des Bauteils 3 auftreffen können. Der jeweilige Strahl 15 kann die Elektrolytlösung 7 umfassen und bevorzugt senkrecht auf den zu reinigenden Bereich 6 auftreffen. Um möglichst mehrere Flächen mit unterschiedlichen Winkeln reinigen zu können, kann es vorgesehen sein, dass die Reinigungseinrichtung 11 mehrere der Strahldüsen 12 aufweist, welche dazu eingerichtet sind, die Strahlen 15 in jeweiligen unterschiedlichen Strahlrichtungen auf das Bauteil 3 oder den Bereich 6 zu führen. Durch die auftreffenden Strahlen 15 der Elektrolytlösung 7 kann die Rückstandsschicht, die sich während des Abtragungsverfahrens gebildet haben kann, von dem Bauteil 3 entfernt werden, solange sie noch flüssig ist. Es kann vorgesehen sein, dass die Fertigungsvorrichtung 1 dazu eingerichtet ist, das Bauteil 3 nach einem vorbestimmten Fertigungsverfahren seriell in mehreren Verfahrensschritten zu fertigen. Um eine zeitnahe Reinigung der einzelnen Bereiche 6 zu ermöglichen, kann es vorgesehen sein, dass nacheinander eine vorbestimmte Anzahl an Schaufeln als einzelne Bereiche 6 des Bauteils 3 durch die Abtragungseinrichtung 2 bearbeitet werden. Es kann vorgesehen sein, dass nach der Abtragung des Materials an einer vorbestimmten Anzahl an Schaufeln das Bauteil 3 in die vorbestimmte Reinigungsposition 14 gefahren wird, um die gerade während des Abtragungsverfahrens bearbeiteten Schaufeln 6 zu reinigen. Nachdem die in dem jeweiligen Verfahrensschritt gereinigten Schaufeln gereinigt sind, kann es vorgesehen sein, dass in dem nächsten Verfahrensschritt das Bauteil 3 in die vorbestimmte Abtragungsposition 4 gefahren wird, um die nächsten Schaufeln 6 des Bauteils 3 abzutragen.

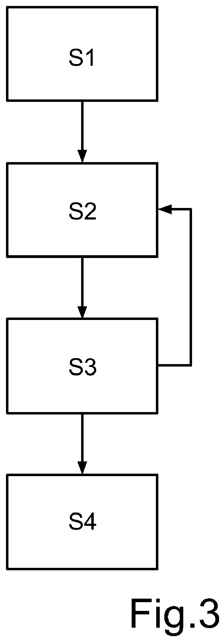

**FIG. 3** zeigt eine schematische Darstellung eines Ablaufs eines Verfahrens zur Fertigung eines Bauteils. Es kann vorgesehen sein, dass in einem ersten Schritt S1 das Bauteil 3 in der Fertigungsvorrichtung 1 angeordnet wird. In einem Schritt S2, kann das Bauteil 3 durch die Halterungseinrichtung 8 in eine vorbestimmte Abtragungsposition 4 gefahren werden. Anschließend kann Material des Bauteils 3 nach dem vorbestimmten Abtragungsverfahren durch die Abtragungseinrichtung 2 der Fertigungsvorrichtung 1 abgetragen werden. Dabei können sich Rückstände am Bauteil 3 anlagern. Nach Abschluss der Abtragung kann es vorgesehen sein, dass das Bauteil 3 in eine vorbestimmte Reinigungsposition 14 verfahren wird, um das Bauteil 3 durch die Reinigungseinrichtung 11 zu reinigen. Dabei können durch Strahldüsen 12 der Reinigungseinrichtung 11 Strahlen 15 ausgegeben werden, wodurch die Rückstände entfernt werden können. Es kann vorgesehen sein, dass die Fertigung des Bauteils 3 in mehreren Schritten erfolgt und ein weiterer Bereich 6 des Bauteils 3 in einem nächsten Schritt abgetragen und gereinigt werden soll. Zu diesem Zweck können der Verfahrensschritt S2 und der Verfahrensschritt S3 für die entsprechenden weiteren der Bereiche 6 wiederholt werden. Es kann vorgesehen sein, dass nach der Bearbeitung aller der Bereiche 6 das Fertigungsverfahren abgeschlossen ist und in einem Schritt S4 das Bauteil 3 aus der Fertigungsvorrichtung 1 entnommen werden kann.

Nach dem Stand der Technik werden die Prozesse der Fertigung/Bearbeitung und Reinigung voneinander klar getrennt und seriell abgearbeitet. Ein hybrider beziehungsweise vermischter Prozess ist nicht bekannt. Auch dafür notwendiges Equipment beziehungsweise Betriebsmittel sind nicht bekannt.

Bei der elektrochemischen Metallbearbeitung wird das Werkstück Bauteil 3 in seiner Mikrostruktur einzeln aufgelöst. Dies geschieht durch eine Redox-Reaktion der Elektrolytlösung 7 mit dem Anodenmaterial des Bauteils 3. Als Reaktionsergebnis dieser chemischen Reaktion, welche für den zielführenden Abtrag notwendig ist, haftet sich an allen prozessnahen Flächen eine Rückstandsschicht ab. Auch die fertig bearbeiteten Bauteilflächen werden mit dem genannten Absatz beaufschlagt. Während des Fertigungsprozess sind die Rückstände noch nahezu flüssig, jedoch nach längerem warten ,ab ca. 1 Stunde, trocknen die Rückstände und es bildet sich eine harte Kruste am Werkstück mit den Rückstandsprodukten, welche jedoch unerwünscht sind. Nach dem derzeitigen Stand der Technik wird das komplette Werkstück, beispielsweise ein Blisk, fertigbearbeitet und im Anschluss seriell in einer anderen Fachabteilung kugelgestrahlt 15, um die harte Rückstandsschicht abzutragen. Leichtere Reinigungsvarianten haben sich als nicht zielführend erwiesen, da die Rückstandsschicht sehr hart und stark haftend ist.

Anstelle einer seriellen Abarbeitung und einem nachgelagerten Reinigungsprozess hat sich ein hybrider Prozess als hilfreich und zeitsparend erwiesen. So ist in die Fertigungsvorrichtung 1 eine Reinigungseinrichtung 11 integriert, welche fest am Maschinengehäuse befestigt sein kann und relativ zum Maschinenkoordinatensystem positioniert sein kann.

Ziel des Prozesses ist es, dass nach der Fertigung einer definierten Anzahl an Bereichen 6 des Bauteils, welche beispielsweise einzelne Schaufelblätter sein können, in der Fertigungsvorrichtung 1 ohne Rüstaufwände automatisch ein Reinigungsverfahren abläuft. Bei der Anzahl kann es sich beispielsweise um 1 bis 10 Bereiche 6 handeln. Für das Reinigungsverfahren kann die Fertigungsvorrichtung das Werkstück in eine vorbestimmte Reinigungsposition 14 in einem Koordinatensystem der Reinigungseinrichtung 11 bewegen und dann umgehend mit dem Reinigungsverfahren starten. Aufgrund der kurzen Trocknungszeit ist es möglich, dass als Reinigungsmedium die normale Elektrolytlösung 7 aus der Maschinenkammer 5 verwendet wird und somit keine anderen Medien benötigt werden. Die nicht stark haftenden Rückstände werden so abgespült und im Anschluss kann mit dem Fertigungsverfahren fortgesetzt werden.

Der hybride Ansatz spart Rüst- und Logistikaufwände, da der Prozessschritt des Kugelstrahlens zum Reinigen komplett entfallen kann. Die Reinigungseinrichtung 11 muss den geometrischen Anforderungen des Werkstücks angepasst sein, sodass die Strahlen 15 möglichst orthogonal auf die Reinigungsflächen treffen.

### Bezugszeichenliste:

- 1: Fertigungsvorrichtung
- 2: Abtragungseinrichtung
- 3: Bauteil
- 4: Abtragungsposition
- 5: Maschinenkammer
- 6: Bereich
- 7: Elektrolytlösung
- 8: Halterungseinrichtung
- 9: Halterungseinrichtung
- 10: Reservoir
- 11: Reinigungseinrichtung
- 12: Strahldüse
- 13: Halterungseinrichtung
- 14: Reinigungsposition
- 15: Strahl
- S1: Verfahrensschritt
- S2: Verfahrensschritt
- S3: Verfahrensschritt
- S4: Verfahrensschritt

## Patentansprüche

1. Fertigungsvorrichtung (1) zum elektrochemischen Bearbeiten eines Bauteils (3), insbesondere eines Turbinenbauteils (3), wobei
die Fertigungsvorrichtung (1) mindestens eine Abtragungseinrichtung (2) umfasst, die dazu eingerichtet ist, nach einem vorbestimmten elektrochemischen Abtragungsverfahren Material des Bauteils (3) abzutragen,
**dadurch gekennzeichnet, dass**
die Fertigungsvorrichtung (1) mindestens eine Reinigungseinrichtung (11) umfasst, die dazu eingerichtet ist, eine Elektrolytlösung (7) nach einem vorbestimmten Strahlverfahren auf das Bauteil (3) zu strahlen (15), um eine sich auf dem Bauteil (3) während des vorbestimmten elektrochemischen Abtragungsverfahren gebildete Rückstandsschicht zu entfernen.

2. Fertigungsvorrichtung (1) nach Anspruch 1,
**dadurch gekennzeichnet, dass**
die Fertigungsvorrichtung (1) dazu eingerichtet ist, das Bauteil (3) und/oder die Abtragungseinrichtung (2) zu verfahren und/oder zu rotieren, um das Bauteil (3) in einer vorbestimmten Abtragungsposition (4) in Bezug auf die Abtragungseinrichtung (2) anzuordnen.

3. Fertigungsvorrichtung (1) nach Anspruch 1 oder 2,
**dadurch gekennzeichnet, dass**
die Fertigungsvorrichtung (1) dazu eingerichtet ist, das Bauteil (3) und/oder die Reinigungseinrichtung (11) zu verfahren und/oder zu rotieren, um das Bauteil (3) in einer vorbestimmten Reinigungsposition (14) in Bezug auf die Reinigungseinrichtung (11) anzuordnen.

4. Fertigungsvorrichtung (1) nach einem der vorhergehenden Ansprüche,
**dadurch gekennzeichnet, dass**
die Reinigungseinrichtung (11) zumindest eine Strahldüse (12) umfasst, die dazu eingerichtet ist, mindestens einen Strahl (15) der Elektrolytlösung (7) auf vorbestimmte Bereiche (6) des Bauteils (3) zu strahlen (15).

5. Fertigungsvorrichtung (1) nach Anspruch 4,
**dadurch gekennzeichnet, dass**
die Reinigungseinrichtung (11) zumindest zwei Strahldüsen (12) umfasst, wobei die Strahldüsen (12) derart zueinander ausgerichtet sind, dass sich die Strahlrichtungen der jeweiligen Strahlen (15) voneinander unterscheiden.

6. Fertigungsvorrichtung (1) nach einem der vorhergehenden Ansprüche,
**dadurch gekennzeichnet, dass**
die Fertigungsvorrichtung (1) dazu eingerichtet ist, das Bauteil (3) während des vorbestimmten elektrochemischen Abtragungsverfahren und/oder während des vorbestimmten Reinigungsverfahrens um zumindest eine vorbestimmte Raumachse zu rotieren.

7. Fertigungsvorrichtung (1) nach einem der vorhergehenden Ansprüche,
**dadurch gekennzeichnet, dass**
die Abtragungseinrichtung (2), die Reinigungseinrichtung (11) und das Bauteil (3) in einer Maschinenkammer (5) der Fertigungsvorrichtung (1) angeordnet sind.

8. Fertigungsvorrichtung (1) nach einem der vorhergehenden Ansprüche,
**dadurch gekennzeichnet, dass**
die Reinigungseinrichtung (11) dazu eingerichtet ist, die Ausrichtung oder Lage zumindest einer der Strahldüsen (12) zu verändern.

9. Fertigungsvorrichtung (1) nach einem der vorhergehenden Ansprüche,
**dadurch gekennzeichnet, dass**
die Reinigungseinrichtung (11) und die Abtragungseinrichtung (2) aus einem selben Reservoir (10) mit der Elektrolytlösung (7) gespeist werden.

10. Fertigungsvorrichtung (1) nach einem der vorhergehenden Ansprüche,
**dadurch gekennzeichnet, dass**
die Fertigungsvorrichtung (1) dazu eingerichtet ist, das Bauteil (3) nach einem vorbestimmten Fertigungsverfahren in mehreren Verfahrensschritten zu fertigen, wobei
die Fertigungsvorrichtung (1) dazu eingerichtet ist, in einem jeweiligen der Verfahrensschritte das Bauteil (3) in der Abtragungsposition (4) anzuordnen und einen jeweiligen Bereich (6) des Bauteils (3) nach dem vorbestimmten Abtragungsverfahren abzutragen, und anschließend das Bauteil (3) in der Reinigungsposition (14) anzuordnen und den jeweiligen Bereich (6) des Bauteils (3) nach dem vorbestimmten Reinigungsverfahren abzutragen.

11. Verfahren zum elektrochemischen Bearbeiten eines Bauteils (3), insbesondere eines Flugzeugbauteils (3), wobei
durch eine Abtragungseinrichtung (2) einer Fertigungsvorrichtung (1) nach einem vorbestimmten elektrochemischen Abtragungsverfahren Material des Bauteils (3) wird,
**dadurch gekennzeichnet, dass**
durch eine Reinigungseinrichtung (11) der Fertigungsvorrichtung (1) ein Elektrolyt nach einem vorbestimmten Strahlverfahren auf das Bauteil (3) gestrahlt (15) wird, um eine sich auf dem Bauteil (3) während des vorbestimmten elektrochemischen Abtragungsverfahren gebildete Rückstandsschicht zu entfernen.

12. Bauteil (3) gefertigt nach dem Verfahren nach Anspruch 11.

13. Bauteil (3) nach Anspruch 12, **dadurch gekennzeichnet, dass** das Bauteil (3) als Blisk ausgeführt ist.
